**Europäisches Patentamt**

**European Patent Office**

**Office européen des brevets**

(11) Publication number: **0 058 555**
**A1**

## (12) EUROPEAN PATENT APPLICATION

(21) Application number: **82300760.4**

(22) Date of filing: **16.02.82**

(51) Int. Cl.³: **B 29 D 3/02**
**B 29 F 1/10**

(30) Priority: **17.02.81 GB 8104944**

(43) Date of publication of application:
**25.08.82 Bulletin 82/34**

(84) Designated Contracting States:
**BE CH DE FR LI SE**

(71) Applicant: **NATIONAL PLASTICS LIMITED**
**505 Ipswich Road**
**Colchester Essex CO4 4HE(GB)**

(72) Inventor: **Mason, Eric Keith Langley**
**51, Oaks Drive**
**Colchester Essex C03 3PS(GB)**

(74) Representative: **Newby, Raymond Laurence et al,**
**J.Y. & G.W. Johnson Furnival House 14/18 High Holborn**
**London WC1V 6DE(GB)**

(54) **Reinforced hollow or tubular articles.**

(57) A method of manufacturing a reinforced hollow or tubular article, comprises the steps of winding, wrapping or forming reinforcement material, for example glass filamentary material impregnated with synthetic resin, around a former (12) to produce an insert (1) for use in a mould, locating the insert (1) in a mould, the internal surface of which defines desired external features (6-11) of the article to be manufactured, and filling the mould space around the insert with moulding material (3), for example polyolefin moulding material filled with glass fibre flock, to mould the external features (6-11) on to the insert (1).

- 1 -

## Reinforced hollow or tubular articles

Reinforced hollow or tubular articles are often produced by winding, wrapping or forming reinforcement material around a former or mandrel which defines or forms an inner surface or part of the desired article.

For example gun barrels have been produced by winding metal wire or strip in close-coiled helical form around a mandrel and welding the coils together by heat and pressure. Non-metallic fibres, for example glass and carbon, have been used in a similar manner, strands of the fibres being wound in helical form around a former and bonded with a synthetic polymer or by metal. British Specification No. 836,372 describes the manufacture of firearm barrels by such methods.

Non-metallic fibres have also been used in the form of a cloth or a non-woven sheet impregnated with a synthetic polymer precursor and wrapped around a mandrel or former. In yet another method, a mass of loose fibres and a sythetic polymer precursor has been formed around a mandrel or former. Such a mass of loose fibres and polymer precursor has been sprayed or otherwise projected onto the surface of a former, which may be rotated, to form a substantially uniform layer which on polymerisation of the precursor forms a reinforced shell to form the desired article or a part of it.

The mandrel or former may remain within the reinforcement to form a part of the article or may be removed. For example a pressure vessel may be produced by winding, wrapping or forming reinforcement material by one of the methods described around a hollow former having the desired internal shape of the vessel.

A feature of all these methods is that the reinforcement material generally follows the contours of the article and is thus ideally positioned to resist the stresses produced in the article when it is subjected to internal pressure. These stresses are frequently identified by resolution into their components around the wall of the article, known as "hoop stress" and the longitudinal stress along the wall.

Reinforced hollow or tubular articles made by methods such as described above are often required to have external projections or attachment points. For example, a carrying handle may be required, or screw holes for the attachment of a component. The position of such projections or attachments and their use or mis-use can cause local stresses in directions other than the usual hoop and longitudinal stresses which the reinforcement material is designed to resist or may reduce the resistance of the reinforcement material to those stresses. The latter is particularly the case if it is necessary to provide an aperture, such as a screw hole, which penetrates partly or wholly through the reinforcing material. Additional reinforcement can be added to overcome these problems but this can be difficult and costly. This invention provides an alternative solution.

According to the invention a method of manufacturing a reinforced hollow or tubular article comprises the steps of winding, wrapping or forming reinforcement material around a former to produce an insert for use in a mould, locating the said insert in a mould, the internal surface of which defines desired external features of the article to be manufactured, and filling the mould space around the insert with moulding material, to mould the said external features onto the insert.

The initial step of winding, wrapping or forming the reinforcement material around the former or mandrel may be performed by one of the methods already described, producing a finished insert with the reinforcement material rigidly secured for the moulding step. This is not essential, however, for the former or mandrel may be placed in the mould with the reinforcement material loosely positioned around it to be located in position and secured by the moulding material which is to surround it.

The moulding material may be a thermoplastic or thermosetting plastics material or some other kind of plastics material. Techniques for moulding such materials around inserts are well known and have been practised for many years. Thus, for example, the moulding step may be an injection moulding operation using a thermoplastics moulding material. The moulding material is chosen to resist the stresses which may be expected in the article during use or mis-use and the shape of the external features is designed with the properties of the moulding material in mind to minimise those stresses.

An article according to the invention may constitute the container of a fire extinguisher.

According to a further feature of the invention a hollow or tubular article comprises an insert including wound, wrapped or formed reinforcement material and designed to resist expected hoop and longitudinal stresses, the insert being enclosed in a moulding embodying desired external features and shaped to resist other stresses which may occur during use or mis-use of the article.

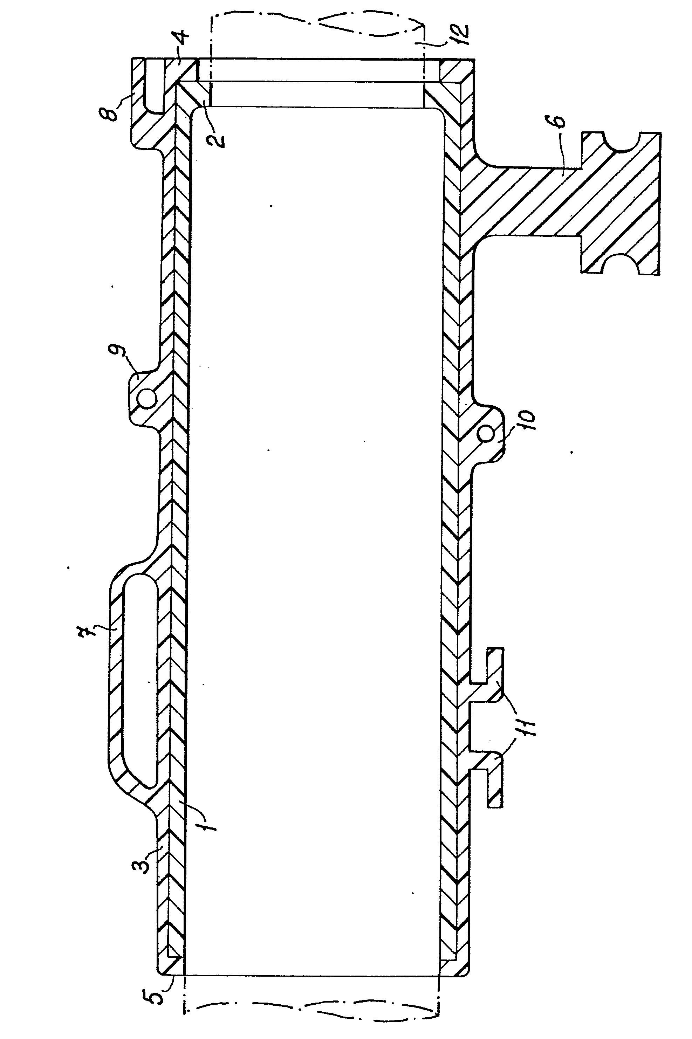

An embodiment of the invention is illustrated by way of example by the accompanying drawing, the single Figure of which is a longitudinal cross-section through a reinforced tubular article.

The article shown in the drawing comprises a tubular inner member 1 having an inward flange 2 at one end around which is moulded by injection moulding a tubular outer part 3 having a complementary inward flange 4 at one end adjacent to the flange 2, an inward flange 5 overlying the other end of the inner member 1, handles 6 and 7 and mounting brackets 8, 9, 10 and 11 for the attachment of other components.

The tubular inner member 1 is produced by coating the relevant part of a former constituted by a cylindrical mandrel 12 (shown in chain-dotted lines) having a reduced part at one end to define the flange 2 with a coating of epoxy resin precursor and winding onto the mandrel a reinforcement material constituted by a tow of continuous glass filaments impregnated with the same epoxy resin precursor. The tow is wound helically around the mandrel in several layers and the winding is impregnated with further epoxy resin precursor as it builds up and is finally given a coating of the precursor when the desired amount of tow has been wound. The precursor is allowed to polymerise. The resulting inner member 1 is placed, on its mandrel 12 or on another mandrel, for example a collapsing mandrel, as an insert in a multi-part injection mould having locating members to fit closely around the ends of the mandrel and a moulding cavity defining the shape of the outer part 3. Polyolefin moulding material filled with glass fibre flock is injected into the space around the member and on solidifying forms the external features 6 to 11 mentioned. The mould is opened and the mandrel 12, or other mandrel, is withdrawn from the article.

The complete article is thus produced in two simple operations. It has all the required external features and no additional reinforcement is required. The wound glass tow reinforcement of the insert will resist hoop and longitudinal stresses encountered in use and the outer member provides a protective shell to resist impact and any stresses produced in use of the handles 6, 7 and the attachment of other components to the mounting brackets 8, 9, 10 and 11.

Continuous filaments other than glass filaments may be used as reinforcement material. Organic filaments, for example synthetic organic filaments may be used. However reinforcement material other than continuous filaments may be used. If the reinforcement material is to be bonded together, bonding materials other than epoxy resins may be used.

The moulding material may be a material other than a polyolefin and it need not be filled with a reinforcement material. If a reinforcement material is used in the material of the tubular outer part of the article it can be a material other than glass fibre flock.

However, the combination of an outer part moulded in a thermoplastic material on a hollow or tubular inner part made of a reinforced thermosetting material can be advantageous.

The continuous filament reinforcement may be an aromatic polyamide for example the polyamide marketed under the name "KEVLAR" by the Du Pont company and this may be advantageously overmoulded with nylon 11.

To achieve a light structure the wall thickness of the insert may be as small as 0.5 mm or 1 mm.

The injection pressure for a thermoplastic moulding material may be 400 - 500 bar and in some circumstances it may be advantageous to use reaction injection moulding to form the moulding, when pressures may be 10 bar or less.

For some applications of articles according to the invention, the mechanical interconnection between the insert and the outer moulding due to ridges produced on the outer surface of the insert by its method of manufacture, for example filament winding, may be of importance in resisting relative movement of the moulding and the insert. Advantageously, the surface valleys and ridges may deviate by, for example a millimetre or at least 0.5 or 0.25 mm from the nominal surface profile in order to give rise to an effective "key" between the insert and the moulding. Superimposed on gross ridges of perhaps as much as 1 mm in height from the overall nominal surface profile, the surface may have a roughness measured in terms of the centreline average (CLA) with respect to the nominal surface profile of the ridge of approximately 0.005 mm or perhaps 0.01 mm or 0.02 mm.

If the article is to be subjected to severe mechanical stresses or to wide variations in temperature where the differential thermal expansion of the insert and the moulding might loosen the mechanical connection between the two, it may be advantageous to coat the insert with a bonding agent prior to moulding. Suitable bonding agents are hot melt adhesive systems such as CRODAMELT (Trade Name) 36-3350, 36-30600 or 30-30700 or crosslinkable silicone rubber systems such as the systems produced by the Dow Corning Company under the type number 721.

CLAIMS

1.    A method of manufacturing a reinforced hollow or tubular article, characterised by the steps of winding, wrapping or forming reinforcement material around a former (12) to produce an insert (1) for use in a mould, locating the said insert in a mould, the internal surface of which defines desired external features of the article to be manufactured, and filling the mould space around the insert with moulding material (3), to mould the said external features on to the insert.

2.    A method as claimed in claim 1, characterised in that the insert (1) is located within the mould with the former (12) still inside it.

3.    A method as claimed in claim 2, characterised in that the reinforcement material constituting the insert (1) is loosely positioned around the former (12).

4.    A method as claimed in claim 1, characterised in that the former (12) is removed from the insert (1) before the insert (1) is located in the mould.

5.    A method as claimed in claim 1, characterised in that the reinforcement material comprises a tow of continuous filaments, the former (12) is constituted by a mandrel, and the reinforcement material is wound on the mandrel and impregnated with a synthetic resin to produce the insert.

6.    A reinforced hollow or tubular article, characterised by an insert (1) including wound, wrapped or formed reinforcement material and designed to resist expected hoop and longitudinal stresses, the insert (1) being enclosed in a moulding (3) embodying desired external features and shaped to resist other stresses which may occur during use or mis-use of the article.

7.   A reinforced hollow or tubular article as claimed in claim 6, wherein the insert (1) includes reinforcement material comprising a tow of wound continuous filaments impregnated with a synthetic resin.

0058555

1/1

# EUROPEAN SEARCH REPORT

**European Patent Office**

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| P,X | EP - A1 - 0 042 782 (G.P.A. INTERNATIONAL) <br> * claims 2, 4 to 6 * | 1,4, 6 | B 29 D 3/02 <br> B 29 F 1/10 |
| X | DE - A - 2 365 213 (AGHEMO et al.) <br> * claim 1; page 4, paragraph 1; page 7, paragraph 3; fig. 2 * | 1,6 | |
| | PLASTICS ENGINEERING, Vol. 34, No. 3, March 1978, Greenwich, Conn. (USA) D.E. LAWSON "Thermoset Parts with Smooth Thermoplastic Surfaces" page 63 | | **TECHNICAL FIELDS SEARCHED (Int.Cl. ³)** <br><br> B 29 D 3/00 <br> B 29 F 1/00 |
| X | * left-hand column, paragraphs 3, 7; right-hand column, paragraph 1; fig. * | 1,4, 6 | |
| X | DE - A1 - 2 704 304 (COUSIN FRERES S.A.) <br> * claims 1, 3; fig. 1, 2 * | 1,6 | |
| Y <br> A | DE - A1 - 2 609 006 (HELIOS APPARATEBAU) <br> * claim 1 * <br> * claim 1 * | 1,5-7 <br><br> 2 | **CATEGORY OF CITED DOCUMENTS** |
| Y | FR - A1 - 2 445 208 (GENERAL TIRE & RUBBER CO.) <br> * claim 1 * <br><br> ./.. | 1,6 | X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons |

| | & member of the same patent family, corresponding document |

The present search report has been drawn up for all claims

| Place of search | Date of completion of the search | Examiner |
|---|---|---|
| Berlin | 06-04-1982 | FINDELI |

EPO Form 1503.1 06.78

0058555

European Patent
Office

**EUROPEAN SEARCH REPORT**

Application number

EP 82 30 0760.4
- page 2 -

| Category | Citation of document with indication, where appropriate, of relevant passages | Relevant to claim | CLASSIFICATION OF THE APPLICATION (Int. Cl.³) |
|---|---|---|---|
| | **DOCUMENTS CONSIDERED TO BE RELEVANT** | | |
| Y | DE - A1 - 2 615 607 (KUNSTHARZ-SCHLEUDERTECHNIK GMBH) * claims 1, 4; fig. * | 1,6, 7 | |
| Y | GB - A - 2 021 478 (CRYSTIC SYSTEMS LTD.) * page 1, lines 6 to 27 * | 1, 5-7 | |
| A | GB - A - 2 019 304 (GENERAL TIRE & RUBBER CO.) * claim 1 * | 1,6 | **TECHNICAL FIELDS SEARCHED (Int. Cl.³)** |